# EUROPÄISCHE PATENTANMELDUNG

(11) **EP 0 794 582 A1**
(43) Veröffentlichungstag der Anmeldung: **10.09.1997**
(21) Anmeldenummer: 97200617.5
(22) Anmeldetag: 03.03.1997
(51) Int. Cl.: H01M 2/12

(54) **Bleiakkumulatordeckel mit Lüftungssystem**

(30) Priorität: 08.03.1996 DE 19609011
(71) Anmelder: DETA-Akkumulatorenwerk GmbH, D-37431 Bad Lauterberg im Harz (DE)
(72) Erfinder: Steffahn, Peter, 37412 Herzberg (DE); Gieseler, Manfred, 37441 Bad Sachsa (DE); Böller, Klaus, Dr., 37520 Osterode (DE); von Borstel, Dieter, Dr., 37431 Bad Lauterberg (DE); Görg, Jürgen, 37431 Bad Lauterberg (DE)
(74) Vertreter: Ackmann, Günther, Dr.-Ing.

(57) **Zusammenfassung**

Beschrieben ist ein Bleiakkumulator mit einem festgelegten Elektrolyten und in sich geschlossenen Zellenkammern (18,19) die jeweils eine durch ein Entgasungsventil (8) verschlossene Füllöffnung (2) im Akkumulatorendeckel (1) aufweisen, wobei jedes Entgasungsventil (8) mit einer Fritte (16) und einer Gasauslaßöffnung versehen ist. Für eine zentrale Entgasung ist vorgesehen, daß der Akkumulatorendeckel (1) mit einem Entgasungskanal (3) versehen ist, in den die Gasauslaßöffnung der Entgasungsventile (8) mündet.

## Beschreibung

Die Erfindung betrifft einen Bleiakkumulator mit einem festgelegten Elektrolyten und in sich geschlossenen Zellenkammern, die jeweils eine durch ein Entgasungsventil verschlossene Füllöffnung im Akkumulatorendeckel aufweisen, wobei jedes Entgasungsventil mit einer Gasauslaßöffnung versehen ist.

Bei Bleiakkumulatoren der gattungsgemäßen Art haben die Entgasungsventile die Aufgabe, erst bei einem vorgegebenen Druck in der betreffenden Kammer das Überdruckgas entweichen zu lassen. Der Druckaufbau in den Zellen erlaubt eine Rückbildung des im elektrochemischen System entstehenden Sauerstoffs zu Wasser. Durch das Entgasungsventil wird jedoch ein unzulässig hoher Druckaufbau in der Zelle verhindert und das Überdruckgas entweicht, ohne daß Elektrolytteilchen ins Freie mitgerissen werden. Außerdem verhindern diese Ventile das Eintreten von Luft in die Zelle. Entgasungsventile dieser Art sind beispielsweise in EP 0 638 944 A1 und DE 42 41 943 A1 beschrieben, wobei durch eine bestimmte Ausbildung der Entgasungskanäle und die Anordnung eines Frittekörpers mitgerissene flüssige Teilchen zurückgehalten werden sollen.

Anderseits ist es bei Bleiakkumulatoren mit einem flüssigen Elektrolyten üblich, die Zellenkammern über einen im Deckel angeordneten Sammelkanal zentral zu entgasen. Zwischen der Füllöffnung der Zellenkammern und einem Stopfen sind kleine Öffnungen vorhanden, durch die das beim Überladen entstehende Gas in den Sammelkanal entweichen kann. Das Gas strömt über den Sammelkanal und durch einen Frittekörper ins Freie (z. B. EP 0 305 822 A1). In DE 83 19 778.8 U1 ist eine Ausführung beschrieben, bei der die Entgasungsöffnungen in einem quer durch die Stopfen führenden zentralen Entgasungskanal münden. Eine zentrale Ableitung der Gase eines Bleiakkumulators vereinfacht die Überwachung und Rückzündungshemmung der zündfähigen Gase.

Bei Bleiakkumulatoren mit einem festgelegten Elektrolyten und das Gas unmittelbar in die Umgebung abgebenden separaten Entgasungsventilen ist eine zentrale Entgasung nicht ohne weiteres möglich.

Der Erfindung liegt die Aufgabe zugrunde, einen Bleiakkumulator der gattungsgemäßen Art derart auszubilden, daß eine zentrale Entgasung erreicht wird, wobei jedoch dessen Zellenkammern in sich geschlossen bleiben.

Diese Aufgabe wird dadurch gelöst, daß der Akkumulatorendeckel mit einem Entgasungskanal versehen ist, in dem die Gasauslaßöffnung der Entgasungsventile mündet.

Das System der in sich geschlossenen Zellenkammern mit Rückbildung der Gase zu Wasser innerhalb jeder Zelle bleibt erfindungsgemäß erhalten und entstehendes Überdruckgas wird gesammelt und zentral abgeleitet. In einfacher Weise ist der Akkumulatorendeckel so ausgebildet, daß das durch die Entgasungsventile entweichende Gas gesammelt und zentral abgeleitet wird. Entgegen der zentralen Entgasung bei den Bleiakkumulatoren mit flüssiger Säure stehen die Zellenkammern nicht unmittelbar mit dem Entgasungskanal in Verbindung, sondern nur über das systemeigene Entgasungsventil.

Eine entsprechende Anpassung der Entgasungsventile kann auf verschiedene Weise erfolgen. Eine zweckmäßige Ausbildung sieht vor, daß das Entgasungsventil in einem hülsenförmigen Verschlußstopfen angeordnet ist, der alle systembedingten Bauteile aufweist. Beispielsweise kann am unteren Ende des Verschlußstopfens ein Ventilboden mit einem ringförmigen Ventilsitz für einen aus einem Elastomer bestehenden Ventilteller befestigt sein. Zur Halterung des Ventiltellers kann der Ventilboden mit einem Trägerrohr versehen sein, das in den Verschlußstopfen ragt und in dem eine den Ventilteller tragende Stange sowie eine Fritte fixiert ist. Bei dieser Ausbildung ist bevorzugt jeder Zellenkammer eine Fritte zugeordnet. Selbstverständlich kann auch statt dessen am Gasauslaß des Entgasungskanals eine zentrale Fritte vorgesehen sein. Um ein späteres Lösen der Verschlußstopfen zu verhindern, kann dieser mit einem Schraubgewinde in der Füllöffnung befestigt und durch eine Sperrverzahnung gegen ein Herausschrauben gesichert sein.

Ein Ausführungsbeispiel der Erfindung ist in der Zeichnung schematisch dargestellt; es zeigt
- Fig. 1: einen Abschnitt eines Akkumulatorendeckels mit einem Entgasungsventil und einem Entgasungskanal in einem Querschnitt und
- Fig. 2: einen Verschlußstopfen mit einer Sperrverzahnung.

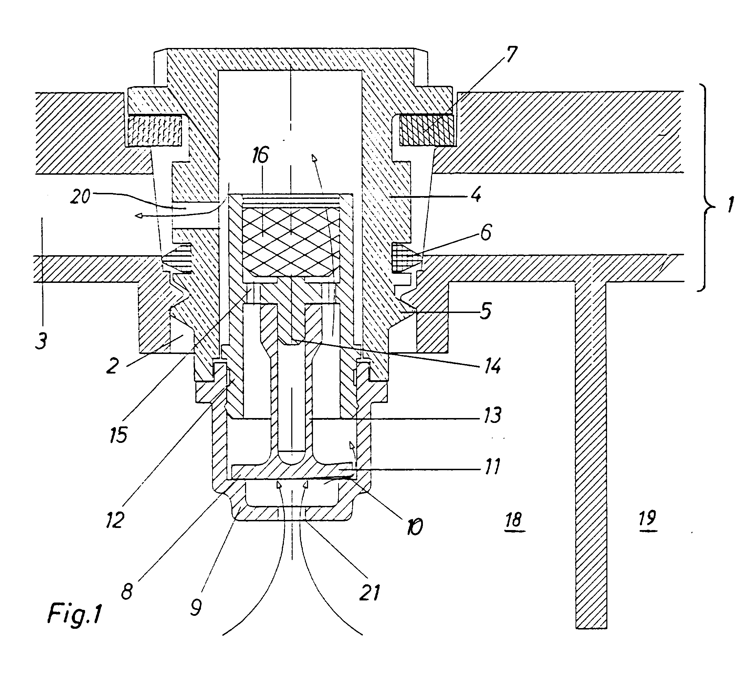

Der in Fig. 1 gezeigte Abschnitt eines Akkumulatorendeckels 1 ist Bestandteil eines Bleiakkumulators mit einem festgelegten Elektrolyten und mehreren in sich geschlossene Zellenkammern 18,19. Jede Zellenkammer 18,19 ist mit einer Füllöffnung 2 versehen, die durch einen in die betreffende Zellenkammer 18 ragenden Rohrstutzen begrenzt wird. Im Akkumulatorendeckel 1 ist ein Entgasungskanal 3 angeordnet, der die Füllöffnungen 2 verbindet und an einem Ende in die Umgebung mündet oder mit einer Vorrichtung zur Rückzündungshemmung der entweichenden Gase verbunden ist.

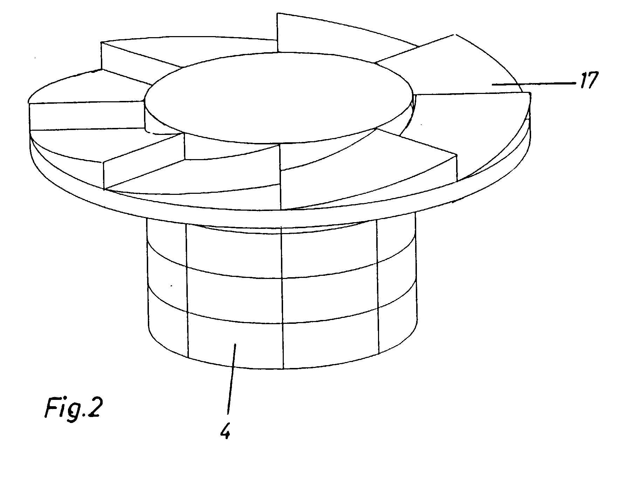

In jeder Füllöffnung 2 ist ein Verschlußstopfen 4 befestigt, der die Füllöffnung 2 nach außen abdichtet, ein Entgasungsventil 8 und eine Fritte 16 enthält und dessen Innenraum über eine Bohrung 20 mit dem zentralen Entgasungskanal 3 in Verbindung steht. Der Verschlußstopfen 4 ist mittels eines Schraubengewindes 5 in der Füllöffnung 2 sitzend am Akkumulatorendeckel 1 befestigt. Eine im Querschnitt keilförmige Profildichtung 6 dichtet die Zellenkammer 18 gegen den Entgasungskanal 3 ab, und eine Flachdichtung 7 sorgt für eine Abdichtung des Entgasungskanals 3 gegenüber der Umgebung. Um ein Herausschrauben des Verschlußstopfens 4 zu verhindern, kann dieser mit einer Sperrverzahnung 17 versehen sein, wie es in Fig. 2 angedeutet ist.

Am unteren Ende des Verschlußstopfens 4 ist ein mit einer Bohrung 21 versehener Ventilboden 9 befestigt, der mit einem ringförmigen Ventilsitz 10 für einen Ventilteller 11 versehen ist. Der Ventilteller 11 liegt gegen den Ventilsitz 10 an und besteht aus einem Elastomer, besitzt also eine gummielastische Eigenschaft, so daß er ab einem bestimmten Gasdruck abgehoben wird, wie in Fig. 1 auf der rechten Seite des Ventilteller 11 angedeutet ist. Der Ventilteller 11 ist mit einer Stange 13 versehen, die an einer Trägerplatte 14 innerhalb eines in den Verschlußstopfen 4 ragenden Trägerrohres 12 befestigt ist. Die Trägerplatte 14 ist mit mehreren Bohrungen 15 bzw. Gasdurchlaßöffnungen versehen. Weiterhin ist innerhalb des Trägerrohres 12 die Fritte 16 angeordnet.

Übersteigt der Gasdruck in der Zellenkammer 18 den durch die elastische Eigenschaft des Ventilteller 11 bedingten Anpreßdruck, entweicht das Gas nach oben durch die Bohrungen 15 und die Fritte 16 und strömt über die Bohrung 20 in den zentralen Entgasungskanal 3. Sinkt der Gasdruck wieder unter den Anpreßdruck, schließt das Entgasungsventil 8 und die Zellenkammer 18 ist geschlossen. Die Entgasungsventile 8 der anderen Zellenkammer 19 usw. des Bleiakkumulators wirken in gleicher Weise, so daß die Zellenkammern immer in sich geschlossen bleiben, bei entsprechendem Überdruck entweichendes Gas jedoch in den zentralen Entgasungskanal 3 strömt und zentral abgeleitet wird und hinsichtlich der Rückzündungsgefahr passiviert werden kann.

## Patentansprüche

1. Bleiakkumulator mit einem festgelegten Elektrolyten und in sich geschlossenen Zellenkammern, die jeweils eine durch ein Entgasungsventil verschlossene Füllöffnung im Akkumulatorendeckel aufweisen, wobei jedes Entgasungsventil mit einer Gasauslaßöffnung versehen ist, dadurch gekennzeichnet, daß der Akkumulatorendekkel (1) mit einem Entgasungskanal (3) versehen ist, in den die Gasauslaßöffnung der Entgasungsventile (8) mündet.

2. Bleiakkumulator nach Anspruch 1, dadurch gekennzeichnet, daß das Entgasungsventil (8) in einem hülsenförmigen Verschlußstopfen (4) angeordnet ist.

3. Bleiakkumulator nach Anspruch 1 oder 2, dadurch gekennzeichnet, daß am unteren Ende des Verschlußstopfens (4) ein Ventilboden (9) mit einem ringförmigen Ventilsitz (10) für einen aus einem Elastomer bestehenden Ventilteller (11) befestigt ist.

4. Bleiakkumulator nach einem der Ansprüche 1 bis 3, dadurch gekennzeichnet, daß der Ventilboden (9) mit einem Trägerrohr (12) versehen ist, welches in den Verschlußstopfen (4) ragt und in dem eine den Ventilteller (11) tragende Stange (13) sowie eine Fritte (16) fixiert ist.

5. Bleiakkumulator nach einem der Ansprüche 1 bis 4, dadurch gekennzeichnet, daß der Verschlußstopfen (4) mit einem Schraubgewinde (5) in der Füllöffnung befestigt und durch eine Sperrverzahnung (17) gegen ein Herausschrauben gesichert ist.
